(19) Europäisches Patentamt
European Patent Office
Office européen des brevets

(11) **EP 4 776 637 A1**

(12) **EUROPEAN PATENT APPLICATION**

(43) Date of publication:
**15.07.2026 Bulletin 2026/29**

(21) Application number: **25305042.1**

(22) Date of filing: **14.01.2025**

(51) International Patent Classification (IPC):
***H04N 21/854*** (2011.01)     ***G06T 9/00*** (2006.01)
***G06T 15/04*** (2011.01)     ***H04N 21/81*** (2011.01)

(52) Cooperative Patent Classification (CPC):
**H04N 21/85406; G06T 9/001; H04N 19/70;**
H04N 21/816

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **GOSSELIN, Philippe Henri
35235 THORIGNE-FOUILLARD (FR)**
• **COVA REGATEIRO, João Pedro
35220 CHATEAUBOURG (FR)**
• **AVRIL, Quentin
35830 BETTON (FR)**

(74) Representative: **Interdigital
Immeuble ZEN 2
845 A, avenue des Champs Blancs
35510 Cesson-Sévigné (FR)**

(54) **AVATAR PARAMETRIC TEXTURE BITSTREAM FORMAT**

(57)     The present principles generally relate to the storage and transmission of avatar texture animation data.

**Figure 1**

**Description**

**1. Technical Field**

The present principles generally relate to the storage and transmission of the parameters of avatar parametric textures.

**2. Background**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

The current effort in MPEG for the streaming of avatar animation is limited to animation of volumetric meshes. Volumetric meshes are animated by pre-computing correspondences to a template (shadow mesh) for every single frame of the volumetric sequence. A shadow mesh is a mesh that contains a lower fidelity than the volumetric mesh. The correspondences between the two are performed in such a way that each vertex of the volumetric mesh maps to a polygon of the shadow mesh. The objective of the shadow mesh is to provide additional semantic information to the volumetric mesh, e.g., skeletal structure and lower polygon mesh representation, permitting the transferring of animations of the shadow mesh onto the dependent volumetric mesh.

At the application side, the volumetric mesh follows the motion of the shadow mesh as a result of the mapping between the two meshes. This behavior is achieved by defining a correspondence schema. For example, in a glTF file, the correspondence schema is defined according to the following syntax:

| Name | Type | Description |
|------|------|-------------|
| correspondence | integer | Provides a reference to the accessor where correspondence information is stored. |
| mesh | integer | Provides a reference to the shadow mesh |
| pose | integer | Provides a reference to the accessor where the transformation information is stored. |
| weights | integer | Provides a reference to the accessor where the animation weights are stored. |

The "MPEG_mesh_linking" extension is dependent on circular buffers ("MPEG_buffer_circular") and timed accessors ("MPEG_accessor_timed") to produce timed animations that are dependent on the shadow mesh. The following parameters has to be transmitted to the decoder. Correspondence: Provides a reference to the accessor that describes the buffer where the correspondence between a dependent mesh and a shadow mesh is established; Mesh: Provides a reference to a mesh in the list of meshes that are referred to as "shadow mesh" and to which the correspondences are established; Pose: Provides a reference to the accessor that describes the buffer, that contains the transformation matrices of all the nodes of the dependent mesh to be re-animated; Weights: Provides a reference to the accessor that describes the buffer where the morph targets weights of the shadow mesh associated with the dependent mesh is available. A mechanism for structuring the parameters of avatar parameter textures generated by a capturing device in a bitstream format that can be used to store, load, and stream this information to a receiver to animate the texture of a corresponding digital representation loaded by the receiver is lacking. A parametric texture is a function which, given a set of parameters, returns a texture. Parametric textures are commonly based on a set of weights $weight_i$. For example:

$$texture = clamp(textureBase + \sum_i weight_i \times textureTarget_i)$$

$textureBase$ is a texture, $textureTarget_i$ are texture displacements and $clamp()$ is a function which ensures that the values of the combination are within a valid range. Textures can be combined in other ways using a set of weights.

**3. Summary**

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate to a method comprising obtaining, from a bitstream, texture parameters and mapping texture parameters. The method further comprises applying the texture parameters to a target avatar texture according to mapping texture parameters and rendering the target avatar. In an embodiment the mapping texture parameters are sent in the header of the bitstream. In another embodiment, the texture parameters have a given value and values of the texture parameters different from the given value are encoded in the bitstream.

The present principles also relate to a device comprising a processor configured to implement the method above.

The present principles also relate to a method comprising obtaining texture parameters of source avatar. Mapping texture parameters from the source avatar to a target avatar are also obtained and the texture parameters and the mapping texture parameters are encoded in a bitstream.

The present principles also relate to a device comprising a processor configured to implement the method above.

### 4. Brief Description of Drawings

The present disclosure will be better understood, and other specific features and advantages will emerge upon reading the following description, the description making reference to the annexed drawings wherein:

- **Figure 1** illustrates a method 10 for decoding avatar parameters according to the present principles;
- **Figure 2** illustrates a method 20 for encoding avatar parameters according to the present principles;
- **Figure 3** shows an example architecture of a device which may be configured to implement methods according to embodiments of the present principles;
- **Figure 4** shows an example of an embodiment of the syntax of a stream when the data are transmitted over a packet-based transmission protocol.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

The "MPEG_mesh_linking" extension is dependent on circular buffers ("MPEG_buffer_circular") and timed accessors ("MPEG_accessor_timed") to produce timed animations that are dependent on the shadow mesh. Correspondence - Provides a reference to the accessor that describes the buffer where the correspondence between a dependent mesh and a shadow mesh is established. Mesh - Provides a reference to a mesh in the list of meshes that are referred to as "shadow mesh" and to which the correspondences are established. Pose - Provides a reference to the accessor that describes the buffer, that contains the transformation matrices of all the nodes of the dependent mesh to be re-animated. Weights - Provides a reference to the accessor that describes the buffer where the morph targets weights of the shadow mesh associated with the dependent mesh is available.

A problem arises when one needs to animate avatar representations and stream its animation parameters over the network, either for reenactment or driving other avatar representations that are supported on other platforms. The current solution in MPEG lacks the flexibility for such modality and only focuses on a very niche use case of dynamic mesh sequences.

Avatar representation arrived with rich properties, able to provide realistic renderings, simplistic animations and easy parametrizations that allow users to personalize and animate their characters freely. The animation parameters, such as skeletal joints animations, blendshapes, keypoints, and more sophisticated controller mechanisms. The increased demand for video teleconferencing solutions requires efficient solutions for streaming of a diverse range of technologies, and MPEG has yet to provide an efficient solution for the problem for the streaming of avatar animation parameters.

According to the present principles, a solution to stream correspondence and animation data related to an avatar representation format, this solution allows mapping different avatar parametric textures.

An avatar animation bitstream is composed of a sequence of avatar animation units (AAUs), which may also be referred to as NAL units. The data types used for the definition of different fields in the syntax structures defined in Tables 2 to 16 are as follows: uimsbf: Unsigned integer with most significant bit first; vlc8: Variable length character string. Contains string data stored as a character array encoded in UTF-8; boolean: A single bit that represents a Boolean value; float: A 32-bit floating point value represented according to the IEEE 754 specification.

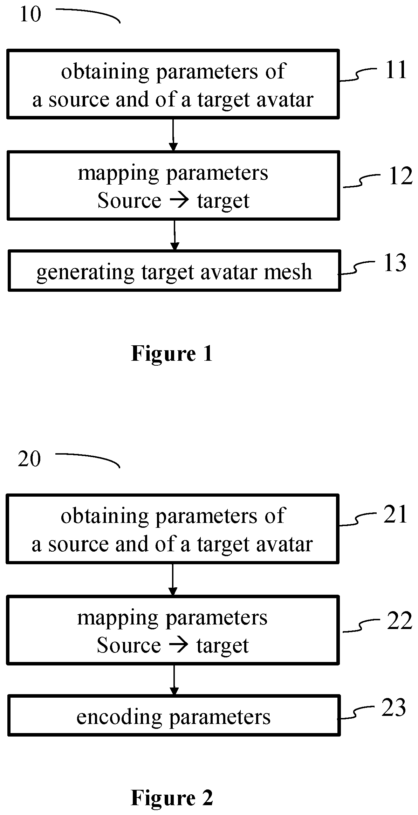

**Figure 1** illustrates a method 10 for decoding avatar parameters according to the present principles. At step 11, parameters of a source avatar parameters and parameters of a target avatar are obtained from at least a source. At step 12, the parameters of the source avatar parameters are mapped to the parameters of the target avatar. At step 13, a target avatar mesh is generated and may be rendered.

**Figure 2** illustrates a method 20 for encoding avatar parameters according to the present principles. At step 21, parameters of a source avatar parameters and parameters of a target avatar are obtained from at least a source. At step 22, the parameters of the source avatar parameters are mapped to the parameters of the target avatar. At step 23, the mapped parameters and the source avatar parameters are encoded in a data stream.

The general syntax structure for an AAU is shown the following tables. Each animation unit contains a header and a payload. An AAU header contains at least a field that indicates the unit type. The contents of the payload depend on the type of the unit. In one embodiment, the framing of the units may be done by signaling the unit (or the unit's payload) length/size in bytes in the AAU header. In another embodiment, the framing of the AAU is done externally through a separate framing mechanism.

| Syntax | No. of bits | Mnemonic |
|---|---|---|
| avatar_animation_unit()<br>{<br>    aau_header();<br>    aau_payload();<br>    **ByteAlignement**<br>} | 0-7 | uimsbf |

The syntax structure of the AAU header is as detailed in the following table:

| Syntax | No. of bits | Mnemonic |
|---|---|---|
| aau_header()<br>{<br>    **auh_unit_type;**<br>    **auh_unit_length;**<br>    reserved<br>} | <br><br>**7**<br>32<br>1 | <br><br>**uimsbf**<br>**uimsbf**<br>**uimsbf** |

The aau_header() syntax construct contains the following syntax elements:

- aau_unit_type: indicates the type of the AAU. The possible values are described in the following table.
- aau_unit_length: indicates the size of the AAU payload in bytes.

| auh_unit_type | Name of AAU type | Content of AAU payload |
|---|---|---|
| 0 | AAU_TARGET | aau_config_target() |
| 1 | AAU_CONFIG | aau_config_unit() |
| 2 | AAU_CONTROL | aau_control_unit() |
| 3 | AAU_MORPH | aau_morph_unit() |
| 4 | AAU_JOINT | aau_joint_unit() |
| 5 | AAU_KEYPOINT | aau_keypoint_unit() |
| 6 | AAU_KEYPOINT2D | aau_keypoint2d_unit() |
| 7 | AAU_TEXTURE | aau_texture_unit() |
| 8..10 | AAU_RSV_8<br>AAU_RSV_10 | Reserved AAU types. |
| 11..31 | AAU_UNSPEC_11<br>AAU_UNSPEC_31 | Unspecified AAU types. |

The aau_payload() is defined as shown in the following table. As can be seen from the definition, depending on the value of auh_type in the aau_header() syntex construct, the payload content will be different.

| Syntax | No. of bits | Mnemonic |
|---|---|---|
| aau_payload()<br>    aau_timestamp;<br>    if (auh_type == AAU_TARGET)<br>      aau_target_unit()<br>    else if (auh_type == AAU_CONFIG)<br>      aau_config_unit()<br>    else if (auh_type == AAU_CONTROL)<br>      aau_control_unit()<br>    else if (auh_type == AAU_MORPH)<br>      aau_morph_unit()<br>    else if (auh_type == AAU_JOINT)<br>      aau_control_unit()<br>    else if (auh_type == AAU_KEYPOINT)<br>      aau_joint unit()<br>    else if (auh_type == AAU_KEYPOINT2D)<br>      aau_control_unit()<br>    else if (auh_type == AAU_TEXTURE) | <br><br>**32** | <br><br>**uimsbf** |

(continued)

| Syntax | No. of bits | Mnemonic |
|---|---|---|
| aau_texture_unit()<br>} | | |

The aau_payload() syntax construct contains the following syntax elements:

- aau_timestamp: is the timestamp of the AAU in ticks. The timestamp in seconds can be calculated as timestamp/timescale, where timescale is signalled in the configuration AAU.
- ByteAlignment: is a padding with up to seven bits set to 0 for the AAU payload to be byte-aligned.

A target avatar configuration AAU is an AAU whose auh_type field is set to AAU_TARGET. The payload of such AAU is defined as shown in Table 1.

| Syntax | No. of bits | Mnemonic |
|---|---|---|
| aau_target_unit()<br>{<br>    acu_avatar_id;<br>    acu_lod_id;<br>    acu_skeleton_id;<br>    acu_controller_set_id;<br>    acu_keypoint_set_id;<br>    acu_texture_set_id;<br>} | <br><br>3<br>3<br>3<br>3<br>3<br>3 | <br><br>uimsbf<br>uimsbf<br>uimsbf<br>uimsbf<br>Uimsbf<br>Uimsbf |

The aau_config_unit() syntax construct contains the following syntax elements:

- acu_avatar_id: is an integer identifying the avatar to animate. In some embodiments, this field may not be present. In some embodiments, this field may be replaced by two fields encoding a string, the first one being the length of the string and the second one the characters of the string.
- acu_lod_id: is an integer identifying the Level Of Detail (LOD) of the avatar to animate. In some embodiments, this field may not be present.
- acu_skeleton_id: is an integer identifying the skeleton of the avatar to animate. In some embodiments, this field may be named "acu_jointset_index". In some embodiments, this field may not be present.
- acu_controller_set_id: is an integer identifying the controller set of the avatar to animate.

In some embodiments, this field may not be present.

- acu_keypoint_set_id: is an integer identifying the keypoint set of the avatar to animate.

In some embodiments, this field may not be present.

- acu_texture_set_id: is an integer identifying the texture of the avatar to animate. In some embodiments, this field may not be present.

In another embodiment, the target avatar information may alternatively be signaled as part of the information in a configuration AAU similar to the one defined in the following subsection.
A configuration AAU is an AAU whose auh_type field is set to AAU_CONFIG. The payload of such AAU is defined as shown in Table 2.

| Syntax | No. of bits | Mnemonic |
|---|---|---|
| aau_config_unit() | | |
| { | | |
|     acu_profile_length; | 8 | uimsbf |
|     acu_animation_profile; | acu_profile_length * 8 | vlc8 |
|     acu_timescale; | 32 | uimsbf |
|     acu_controller_correpondence_flag; | 1 | boolean |
|     if (acu_controller_correspondence_flag) { | | |
|         acu_control_precision_minus1; | 3 | uimsbf |
|         acu_controller_count; | 10 | uimsbf |
|         for (i=0; i<acu_controller_count; i++) { | | |
|             acu_target_controller_index[i]; | 10 | uimsbf |
|         } | | |
|     } | | |
|     acu_morph_target_correspondence_flag; | 1 | boolean |
|     if (acu_morph_target_correspondence_flag) { | | |
|         acu_morph_target_precision_minus1; | 3 | uimsbf |
|         acu_morph_target_count; | 10 | uimsbf |
|         for (i=0; i<acu_morph_target_count; i++) { | | |
|             acu_target_morph_target_index[i]; | 10 | uimsbf |
|         } | | |
|     } | | |
|     acu_joint_correpondence_flag; | 1 | boolean |
|     if (acu_joint_correspondence_flag) { | | |
|         acu_joint_count; | 10 | uimsbf |
|         for (i=0; i<acu_joint_count; i++) { | | |
|             acu_target_joint_index[i]; | 10 | uimsbf |
|         } | | |
|     } | | |
|     acu_keypoint_correpondence_flag; | 1 | boolean |
|     if (acu_keypoint_correspondence_flag) { | | |
|         acu_keypoint_count; | 10 | uimsbf |
|         for (i=0; i<acu_keypoint_count; i++) { | | |
|             acu_target_keypoint_index[i]; | 10 | uimsbf |
|         } | | |
|     } | | |
|     acu_keypoint2d_correpondence_flag; | 1 | boolean |
|     if (acu_keypoint2d_correspondence_flag) { | | |
|         acu_keypoint2d_count; | 16 | uimsbf |
|         for (i=0; i<acu_keypoint2d_count; i++) { | | |
|             acu_target_keypoint2d_index[i]; | 16 | uimsbf |
|         } | | |
|     } | | |
|     acu_texture_correpondence_flag; | 1 | boolean |
|     if (acu_texture_correspondence_flag) { | | |
|         acu_texture_precision_minus1; | 3 | uimsbf |
|         acu_texture_count; | 16 | uimsbf |
|         for (i=0; i<acu_texture_count; i++) { | | |
|             acu_target_texture_index[i]; | 16 | uimsbf |

|  |  |  |
|---|---|---|
| } |  |  |
| } |  |  |
| **acu_reserved_correspondence_flags;** | 3 | **booleans** |
| **acu_reserved_unspecified_flags;** | 22 | **booleans** |
| } |  |  |

The aau_config_unit() syntax construct contains the following syntax elements:

- acu_profile_length: is the number of characters in the profile string signalled by acu animation_profile.
- acu_animation_profile: is a character string with the name of the profile that generated stream conforms to.
- acu_timescale: is the number of ticks per second.
- acu_control_precision_minus1: plus 1 specifies the size in bytes of the target avatar index in control AAUs. The value of this field shall be greater than 0 and smaller than or equal to 3.
- acu_controller_correspondence_flag: is a flag indicating whether controller correspondence information is signalled in this configuration AAU. Value 0 indicates that no correspondence information is present. Value 1 indicates that controller correspondence information is present in the configuration AAU.
- acu_target_controller_index[i]: is the index of the target controller corresponding to the source avatar's i-th controller.
- acu_morph target correspondence flag: is a flag indicating whether morph target correspondence information is signalled in this configuration AAU. Value 0 indicates that no correspondence information is present. Value 1 indicates that morph target correspondence information is present in the configuration AAU.
- acu_target_morph target_index[i]: is the index of the target morph target corresponding to the source avatar's i-th morph target.
- acu_joint_correspondence_flag: is a flag indicating whether joint correspondence information is signaled in this configuration AAU. Value 0 indicates that no correspondence information is present. Value 1 indicates that joint correspondence information is present in the configuration AAU.
- acu_target_joint_index[i]: is the index of the target avatar skeleton joint corresponding to the source avatar's i-th joint.
- acu_keypoint correspondence flag: is a flag indicating whether keypoint correspondence information is signalled in this configuration AAU. Value 0 indicates that no correspondence information is present. Value 1 indicates that keypoint correspondence information is present in the configuration AAU.
- acu target_keypoint_index[i]: is the index of the target keypoint corresponding to the source avatar's i-th keypoint.acu_keypoint correspondence flag: is a flag indicating whether keypoint correspondence information is signalled in this configuration AAU. Value 0 indicates that no correspondence information is present. Value 1 indicates that keypoint correspondence information is present in the configuration AAU.
- acu target_keypoint_index[i]: is the index of the target keypoint corresponding to the source avatar's i-th keypoint.
- acu_keypoint2d correspondence flag: is a flag indicating whether 2D keypoint correspondence information is signalled in this configuration AAU. Value 0 indicates that no correspondence information is present. Value 1 indicates that 2D keypoint correspondence information is present in the configuration AAU.
- acu target_keypoint2d_index[i]: is the index of the target 2D keypoint corresponding to the source avatar's i-th 2D keypoint.
- acu_texture_correspondence_flag: is a flag indicating whether texture correspondence information is signaled in this configuration AAU. Value 0 indicates that no correspondence information is present. Value 1 indicates that texture correspondence information is present in the configuration AAU.
- acu_target_texture_index[i]: is the index of the target texture corresponding to the source avatar's i-th texture.
- acu_reserved_correspondence_flags: are reserved flags for the correspondences of future avatar components.
- acu_reserved_unspecified flags: are flags for unspecified features.

In another embodiment, the configuration AAU may explicitly signal the index of the source component (controller, morph target, joint, keypoint or keypoint 2D) in addition to the index of the target component (same). The corresponding syntax for this is shown in Table 3, where the syntax element acu_source_<component>_index[i] indicates the i-th index of a source component signalled in the control AAU and acu target <component>_index[i] indicates the corresponding remove avatar component index.

| Syntax | No. of bits | Mnemonic |
|---|---|---|
| aau_config_unit() | | |
| { | | |
|     acu_profile_length; | 8 | uimsbf |
|     acu_animation_profile; | acu_profile_length * 8 | vlc8 |
|     acu_timescale; | 32 | uimsbf |
|     acu_control_precision; | | |
|     acu_controller_correpondence_flag; | 1 | boolean |

| | | |
|---|---|---|
| if (acu_controller_correspondence_flag) { | | |
|     **acu_controller_count;** | **10** | **uimsbf** |
|     for (i=0; i<acu_controller_count; i++) { | | |
|         **acu_source_controller_index**[i]; | **10** | **uimsbf** |
|         **acu_target_controller_index**[i]; | **10** | **uimsbf** |
|     } | | |
| } | | |
| **acu_morph_target_correspondence_flag;** | **1** | **boolean** |
| if (acu_morph_target_correspondence_flag) { | | |
|     **acu_morph_target_count;** | **10** | **uimsbf** |
|     for (i=0; i<acu_morph_target_count; i++) { | | |
|         **acu_source_morph_target_index**[i]; | **10** | **uimsbf** |
|         **acu_target_morph_target_index**[i]; | **10** | **uimsbf** |
|     } | | |
| } | | |
| **acu_joint_correpondence_flag;** | **1** | **boolean** |
| if (acu_joint_correspondence_flag) { | | |
|     **acu_joint_count;** | **10** | **uimsbf** |
|     for (i=0; i<acu_joint_count; i++) { | | |
|         **acu_source_joint_index**[i]; | **10** | **uimsbf** |
|         **acu_target_joint_index**[i]; | **10** | **uimsbf** |
|     } | | |
| } | | |
| **acu_keypoint_correpondence_flag;** | **1** | **boolean** |
| if (acu_keypoint_correspondence_flag) { | | |
|     **acu_keypoint_count;** | **10** | **uimsbf** |
|     for (i=0; i<acu_keypoint_count; i++) { | | |
|         **acu_source_keypoint_index**[i]; | **10** | **uimsbf** |
|         **acu_target_keypoint_index**[i]; | **10** | **uimsbf** |
|     } | | |
| } | | |
| **acu_keypoint2d_correpondence_flag;** | **1** | **boolean** |
| if (acu_keypoint2d_correspondence_flag) { | | |
|     **acu_keypoint2d_count;** | **16** | **uimsbf** |
|     for (i=0; i<acu_keypoint2d_count; i++) { | | |
|         **acu_source_keypoint2d_index**[i]; | **16** | **uimsbf** |
|         **acu_target_keypoint2d_index**[i]; | **16** | **uimsbf** |
|     } | | |
| } | | |
| **acu_texture_correpondence_flag;** | **1** | **boolean** |
| if (acu_texture_correspondence_flag) { | | |
|     **acu_texture_count;** | **16** | **uimsbf** |
|     for (i=0; i<acu_texture_count; i++) { | | |
|         **acu_source_texture_index**[i]; | **16** | **uimsbf** |
|         **acu_target_texture_index**[i]; | **16** | **uimsbf** |
|     } | | |
| } | | |
| **acu_reserved_correspondence_flags;** | **3** | **booleans** |
| **acu_reserved_unspecified_flags;** | **22** | **booleans** |
| } | | |

In another embodiment, in addition to the information signaled in the previous two embodiments, the configuration AAU may include information on the target avatar instead of having a separate AAU type for that information. An example configuration AAU based on this embodiment is as follows.

| Syntax | No. of bits | Mnemonic |
|---|---|---|
| aau_config_unit()<br>{<br>    acu_profile_length; | 8 | uimsbf |
|     acu_animation_profile; | acu_profile_length * 8 | vlc8 |
|     acu_timescale; | 32 | uimsbf |
|     acu_control_precision_minus1; | 3 | uimsbf |
|     acu_target_avatar_info_flag; | 1 | boolean |
|     if (acu_target_avatar_info_flag) {<br>        acu_avatar_id; | 3 | uimsbf |
|         acu_lod_id; | 3 | uimsbf |
|         acu_skeleton_id; | 3 | uimsbf |
|         acu_controller_set_id; | 3 | uimsbf |
|         acu_keypoint_set_id; | 3 | uimsbf |
|     }<br>    acu_controller_correpondence_flag; | 1 | boolean |
|     if (acu_controller_correspondence_flag) {<br>        acu_controller_count; | 10 | uimsbf |
|         for (i=0; i<acu_controller_count; i++) {<br>            acu_target_controller_index[i]; | 10 | uimsbf |
|         }<br>    }<br>    acu_morph_target_correspondence_flag; | 1 | boolean |
|     if (acu_morph_target_correspondence_flag) {<br>        acu_morph_target_count; | 10 | uimsbf |
|         for (i=0; i<acu_morph_target_count; i++) {<br>            acu_target_morph_target_index[i]; | 10 | uimsbf |
|         }<br>    }<br>    acu_joint_correpondence_flag; | 1 | boolean |
|     if (acu_joint_correspondence_flag) {<br>        acu_joint_count; | 10 | uimsbf |
|         for (i=0; i<acu_joint_count; i++) {<br>            acu_target_joint_index[i]; | 10 | uimsbf |
|         }<br>    }<br>    acu_keypoint_correpondence_flag; | 1 | boolean |
|     if (acu_keypoint_correspondence_flag) {<br>        acu_keypoint_count; | 10 | uimsbf |

| Syntax | No. of bits | Mnemonic |
|---|---|---|
| for (i=0; i<acu_keypoint_count; i++) {<br>    **acu_target_keypoint_index**[i];<br>    }<br>}<br>**acu_keypoint2d_correpondence_flag;**<br>if (acu_keypoint2d_correspondence_flag) {<br>    **acu_keypoint2d_count;**<br>    for (i=0; i<acu_keypoint2d_count; i++) {<br>        **acu_target_keypoint2d_index**[i];<br>    }<br>}<br>**acu_texture_correpondence_flag;**<br>if (acu_texture_correspondence_flag) {<br>    **acu_texture_count;**<br>    for (i=0; i<acu_texture_count; i++) {<br>        **acu_target_texture_index**[i];<br>    }<br>}<br>**acu_reserved_correspondence_flags;**<br>**acu_reserved_unspecified_flags;**<br>} | 10<br><br><br><br>1<br><br>16<br><br>16<br><br><br><br>1<br><br>16<br><br>16<br><br><br>3<br>22 | uimsbf<br><br><br><br>boolean<br><br>uimsbf<br><br>uimsbf<br><br><br><br>boolean<br><br>uimsbf<br><br>uimsbf<br><br><br>booleans<br>booleans |

A control AAU is an AAU whose aau_unit_type field is set to AAU_CONTROL. The payload of such AAU is defined as shown below.

| Syntax | No. of bits | Mnemonic |
|---|---|---|
| aau_control_unit()<br>{<br>    **atu_controller_count_minus1;**<br>    for (i=1; i<atu_controller_count_minus1 + 1;<br>i++) {<br>    **atu_controller_index**[i];<br>    **atu_control_weight**[i];<br>    }<br>} | <br><br>10<br><br><br><br>acu_control_precision*8<br>32 | <br><br>uimsbf<br><br><br><br>uimsbf<br>float |

The aau control_unit() syntax construct contains the following syntax elements:

- atu_controller_count_minus1: plus 1 indicates the number of controller weights present in the control AAU.
- atu controller_index[i]: is the index of the i-th source controller whose weight is signalled in the control AAU.
- atu_control_weight[i]: is the weight to be applied for the target controller corresponding to the i-th source controller in the control AAU.

A morph target AAU is an AAU whose auh_type field is set to AAU _MORPH. The payload of such AAU is defined below:

| Syntax | No. of bits | Mnemonic |
|---|---|---|
| aau_morph_unit()<br>{<br>    **amu_morph_target_count_minus1**;<br>    for (i=1; i<amu_morph_target_count_minus1 + 1; i++) {<br>        **amu_morph_target_index**[i];<br>        **amu_morph_target_weight**[i];<br>    }<br>} | 10<br><br><br>acu_morph_target_precision*8<br>32 | uimsbf<br><br><br>uimsbf<br>float |

The aau_morph_unit() syntax construct contains the following syntax elements:

- amu_morph_target_count_minus1: plus 1 indicates the number of morph targets whose weights are signalled in this morph target AAU.
- amu_morph_traget_index[i]: is the index of the i-th morph target whose weight is signalled in the control AAU. amu_morph_traget_weight[i]:
  Joint Transform Avatar Animation Unit

A joint transform AAU is an AAU whose auh_type field is set to AAU_JOINT. The payload of such AAU is defined as shown below:

| Syntax | No. of bits | Mnemonic |
|---|---|---|
| aau_joint_unit()<br>{<br>    **aju_joint_count_minus1**;<br>    for (i=1; i<aju_joint_count_minus1 + 1; i++) {<br>        **aju_source_joint_index**[i];<br>        **aju_joint_transform**[i];<br>    }<br>} | 10<br><br>10<br>16 * 32 | uimsbf<br><br>uimsbf<br>float |

The aau_joint_unit() syntax construct contains the following syntax elements:

- aju_joint_count_minus1: plus 1 indicate the number of joint transformations signalled in the joint transform AAU.
- aju_source_joint_index[i]: indicates the source joint index for the i-th joint signalled in the joint transform AAU.
- aju_joint_transform[i]: is the transformation matrix for the target joint corresponding to the source joint whose index is signalled by the field aju_source_joint_index[i].

In some embodiments, the aju_joint_transform[i] field may be replaced by an encoding of optional translation, rotation and scale, as presented below:

| Syntax | No. of bits | Mnemonic |
|---|---|---|
| aau_joint_unit() <br> { <br>     **aju_joint_count_minus1;** <br>     for (i=1; i<aju_joint_count_minus1 + 1; i++) { <br>         **aju_source_joint_index**[i]; <br>         **aju_joint_translation_flag**[i]; <br>         if (aju_joint_translation_flag[i]) { <br>             **aju_joint_translation**[i]; <br>         } <br>         **aju_joint_rotation_flag**[i]; <br>         if (aju_joint_rotation_flag[i]) { <br>             **aju_joint_rotation**[i]; <br>         } <br>         **aju_joint_scale_flag**[i]; <br>         if (aju_joint_scale_flag[i]) { <br>             **aju_joint_scale**[i]; <br>         } <br>     } <br> } | <br><br>**10** <br><br>**10** <br>**1** <br><br>**3 * 32** <br><br>**1** <br><br>**4 * 32** <br><br>**1** <br><br>**3 * 32** | <br><br>**uimsbf** <br><br>**uimsbf** <br>**boolean** <br><br>**float** <br><br>**boolean** <br><br>**float** <br><br>**boolean** <br><br>**float** |

- aju_joint_translation_flag[i]: is a flag indicating whether a translation is signalled for the i-th joint.
- aju joint_translation[i]: is the translation for the target joint corresponding to the source joint whose index is signalled by the field aju_source_joint_index[i].
- aju_joint_rotation_flag[i]: is a flag indicating whether a rotation is signalled for the i-th joint.
- aju_joint_rotation [i]: is the rotation for the target joint corresponding to the source joint whose index is signalled by the field aju_source_joint_index[i].
- aju_joint_scale_flag[i]: is a flag indicating whether a scale is signalled for the i-th joint.
- ajujoint_scale[i]: is the scale for the target joint corresponding to the source joint whose index is signalled by the field aju_source_joint_index[i].

Keypoint avatar animation unit

A keypoint AAU is an AAU whose auh_type field is set to AAU_KEYPOINT. The payload of such AAU is defined as shown below:

| Syntax | No. of bits | Mnemonic |
|---|---|---|
| aau_keypoint_unit() <br> { <br>     **aku_keypoint_count_minus1;** <br>     for (i=1; i<aku_keypoint_count_minus1 + 1; i++) { <br>         **aku_source_keypoint_index**[i]; <br>         **aku_keypoint_transform**[i]; <br>     } <br> } | <br><br>**16** <br><br>**16** <br>**16 * 32** | <br><br>**uimsbf** <br><br>**uimsbf** <br>**float** |

The aau_keypoint_unit() syntax construct contains the following syntax elements:

- aku_keypoint_count_minus1: plus 1 indicates the number of keypoint transformations signalled in the kypoint transform AAU.
- aku_source_keypoint_index[i]: indicates the source keypoint index for the i-th keypoint signalled in the keypoint transform AAU.
- aku_keypoint_transform[i]: is the transformation matrix for the target keypoint corresponding to the source keypoint whose index is signalled by the field aku_source_keypoint_index[i].

In some embodiments, the aku_keypoint_transform[i] field may be replaced by an encoding of optional translation, rotation, and scale, as presented below:

| Syntax | No. of bits | Mnemonic |
|---|---|---|
| aau_keypoint_unit() | | |
| { | | |
|     **aku_keypoint_count_minus1**; | **10** | **uimsbf** |
|     for (i=1; i<aku_joint_count_minus1 + 1; i++) { | | |
|         **aku_source_keypoint_index**[i]; | **10** | **uimsbf** |
|         **aku_keypoint_translation_flag**[i]; | **1** | **boolean** |
|         if (aku_keypoint_translation_flag[i]) { | | |
|             **aku_keypoint_translation**[i]; | **3 * 32** | **float** |
|         } | | |
|         **aku_keypoint_rotation_flag**[i]; | **1** | **boolean** |

| Syntax | No. of bits | Mnemonic |
|---|---|---|
|         if (aku_keypoint_rotation_flag[i]) { | | |
|             **aku_keypoint_rotation**[i]; | **4 * 32** | **float** |
|         } | | |
|         **aku_keypoint_scale_flag**[i]; | **1** | **boolean** |
|         if (aku_keypoint_scale_flag[i]) { | | |
|             **aku_keypoint_scale**[i]; | **3 * 32** | **float** |
|         } | | |
|     } | | |
| } | | |

- aku_keypoint_translation_flag[i]: is a flag indicating whether a translation is signalled for the i-th keypoint.
- aku_keypoint translation[i]: is the translation for the target keypoint corresponding to the source keypoint whose index is signalled by the field aku_source_keypoint_index[i].
- aku_keypoint_rotation_flag[i]: is a flag indicating whether a rotation is signalled for the i-th keypoint.
- aku_keypoint_ rotation [i]: is the rotation for the target keypoint corresponding to the source keypoint whose index is signalled by the field aku_source_keypoint_index[i].
- aku_keypoint_scale_flag[i]: is a flag indicating whether a scale is signalled for the i-th keypoint.
- aku_keypoint_scale[i]: is the scale for the target keypoint corresponding to the source keypoint whose index is signalled by the field aku_source_keypoint_index[i].

A 2D keypoint AAU is an AAU whose auh_type field is set to AAU_KEYPOINT2D. The payload of such AAU is defined as shown below:

| Syntax | No. of bits | Mnemonic |
|---|---|---|
| aau_keypoint2d_unit() | | |
| { | | |
|     **ak2u_keypoint2d_count_minus1**; | **16** | **uimsbf** |
|     for (i=1; i<ak2u_keypoint2d_count_minus1 + 1; i++) { | | |
|         **ak2u_source_keypoint2d_index**[i]; | **16** | **uimsbf** |
|         **ak2u_keypoint2d_transform**[i]; | **9 * 32** | **float** |
|     } | | |
| } | | |

The aau_keypoint2d_unit() syntax construct contains the following syntax elements:

- ak2u_keypoint2d_count_minus1: plus 1 indicate the number of 2D keypoint transformations signalled in the joint transform AAU.

- ak2u source_keypoint2d_index[i]: indicates the source 2D keypoint index for the i-th 2D keypoint signalled in the 2D keypoint transform AAU.
- ak2u_keypoint2d_transform[i]: is the transformation matrix for the target 2D keypoint corresponding to the source 2D keypoint whose index is signalled by the field ak2u source_keypoint2d_index[i].

In some embodiments, the ak2u_keypoint2d_transform[i] field may be replaced by an encoding of optional translation, rotation, and scale, as presented in below:

| Syntax | No. of bits | Mnemonic |
|---|---|---|
| aau_keypoint2d_unit() {<br>    **ak2u_keypoint2d_count_minus1**;<br>    for (i=1; i<ak2u_joint2d_count_minus1 + 1; i++) {<br>        **ak2u_source_keypoint2d _index**[i];<br>        **ak2u_keypoint2d_translation_flag**[i];<br>        if (ak2u_keypoint2d_translation_flag[i]) {<br>            **ak2u_keypoint2d_translation**[i];<br>        }<br>        **ak2u_keypoint2d_rotation_flag**[i];<br>        if (ak2u_keypoint2d_rotation_flag[i]) {<br>            **ak2u_keypoint2d_rotation**[i];<br>        }<br>        **ak2u_keypoint2d_scale_flag**[i];<br>        if (ak2u_keypoint2d_scale_flag[i]) {<br>            **ak2u_keypoint2d_scale**[i];<br>        }<br>    }<br>} | 16<br><br>16<br>1<br><br>2 * 32<br><br>1<br><br>3 * 32<br><br>1<br><br>2 * 32 | uimsbf<br><br>uimsbf<br>boolean<br><br>float<br><br>boolean<br><br>float<br><br>boolean<br><br>float |

- ak2u_keypoint2d_translation_flag[i]: is a flag indicating whether a translation is signalled for the i-th 2D keypoint.
- ak2u_keypoint2d_translation[i]: is the translation for the target 2D keypoint corresponding to the source 2D keypoint whose index is signaled by the field ak2u source_keypoint2d_index[i].
- ak2u_keypoint2d_rotation flag[i]: is a flag indicating whether a 2D rotation is signaled for the i-th 2D keypoint.
- ak2u_keypoint2d_rotation [i]: is the rotation for the target 2D keypoint corresponding to the source 2D keypoint whose index is signaled by the field ak2u source_keypoint2d_index[i].
- ak2u_keypoint2d_scale_flag[i]: is a flag indicating whether a scale is signaled for the i-th 2D keypoint.
- ak2u_keypoint2d_scale[i]: is the scale for the target 2D keypoint corresponding to the source 2D keypoint whose index is signaled by the field ak2u_source_keypoint2d_index[i].

A control AAU is an AAU whose aau_unit_type field is set to AAU_Texture. The payload of such AAU is defined as shown below:

| Syntax | No. of bits | Mnemonic |
|---|---|---|
| aau_texture_unit() {<br>    **atu_texture_count_minus1**;<br>    for (i=1; i<atu_texture_count_minus1 + 1; i++) {<br>        **atu_texture_index**[i];<br>        **atu_texture_weight**[i];<br>    }<br>} | <br>10<br><br>acu_texture_precision*8<br>32 | <br>uimsbf<br><br>uimsbf<br>float |

The aau_texture_unit() syntax construct contains the following syntax elements:

- atu_texture_count_minus1: plus 1 indicates the number of parametric texture weights present in the control AAU.
- atu_texture_index[i]: is the index of the i-th source texture parameter whose weight is signalled in the control AAU.
- atu_texture_weight[i]: is the weight to be applied for the target texture parameter corresponding to the i-th source texture parameter in the control AAU.

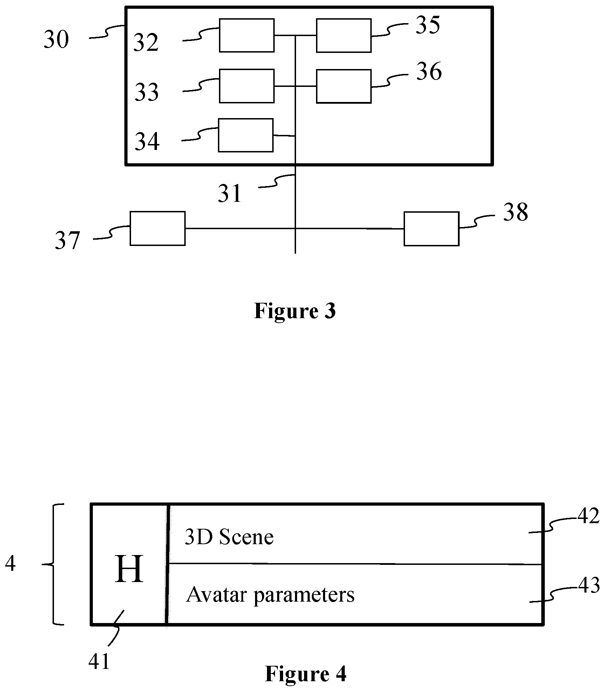

**Figure 3** shows an example architecture of a device 30 which may be configured to implement methods according to embodiments of the present principles. The device is linked with other devices via their bus 31 and/or via I/O interface 36.

Device 30 comprises following elements that are linked together by a data and address bus 31:D

- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of managing a representation of the real environment of a user of an XR application, and belongs to a set comprising:

- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding point clouds according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each type of attribute data, for instance one for the color, one for the reflectance, one for the normal vectors, etc.). Syntax element 42 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method comprising:

- obtaining, from a bitstream, texture parameters and mapping texture parameters;
- applying the texture parameters to a target avatar texture according to the mapping texture parameters; and
- rendering the target avatar texture.

2. The method of claim 1, wherein the mapping texture parameters are sent in a header of the bitstream.

3. The method of claim 1 or 2, wherein the texture parameters have a given value and wherein values of the texture parameters different from the given value are encoded in the bitstream.

4. A device comprising a processor configured for:

- obtaining, from a bitstream, texture parameters and mapping texture parameters;
- applying the texture parameters to a target avatar texture according to the mapping texture parameters; and
- rendering the target avatar texture.

5. The device of claim 4, wherein the mapping texture parameters are sent in a header of the bitstream.

6. The device of claim 4 or 5, wherein the texture parameters have a given value and wherein values of the texture parameters different from the given value are encoded in the bitstream.

7. A method comprising:

- obtaining texture parameters of source avatar;
- obtaining mapping texture parameters from the source avatar to a target avatar; and
- encoding the texture parameters and the mapping texture parameters.

8. A device comprising a processor configured for:

- obtaining texture parameters of source avatar;
- obtaining mapping texture parameters from the source avatar to a target avatar; and
- encoding the texture parameters and the mapping texture parameters.

10

obtaining parameters of
a source and of a target avatar — 11

mapping parameters
Source → target — 12

generating target avatar mesh — 13

**Figure 1**

20

obtaining parameters of
a source and of a target avatar — 21

mapping parameters
Source → target — 22

encoding parameters — 23

**Figure 2**

30 ⌐ 32 [ ] — [ ] ⌐ 35
33 ⌐ [ ] — [ ] ⌐ 36
34 ⌐ [ ] —
31 ⌐
37 ⌐ [ ] [ ] ⌐ 38

**Figure 3**

4 { | H | 3D Scene | ⌐42 |
         |   | Avatar parameters | ⌐43 |
41

**Figure 4**

Europäisches
Patentamt
European
Patent Office
Office européen
des brevets

## EUROPEAN SEARCH REPORT

Application Number

EP 25 30 5042

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/256340 A1 (INTERDIGITAL CE PATENT HOLDINGS SAS [FR]) 19 December 2024 (2024-12-19) * paragraphs [0005], [0024], [0031]; figure 2 * ----- | 1-8 | INV. H04N21/854 G06T9/00 G06T15/04 ADD. H04N21/81 |
| A | "White paper on MPEG-I Scene Description", 140. MPEG MEETING; 20221024 - 20221028; MAINZ; (MOTION PICTURE EXPERT GROUP OR ISO/IEC JTC1/SC29/WG11), , no. n22138 6 November 2022 (2022-11-06), XP030305014, Retrieved from the Internet: URL:https://dms.mpeg.expert/doc_end_user/d ocuments/140_Mainz/wg11/MDS22138_AG03_N000 91.zip AG3w91SN22138White Paper on MPEG-I Scene Description.pdf [retrieved on 2022-11-06] * page 4 * ----- | 1-8 | |
| A | SIDDHARTHA CHATTOPADHYAY ET AL: "Efficient compression and delivery of stored motion data for avatar animation in resource constrained devices", PROCEEDINGS OF THE ACM SYMPOSIUM ON VIRTUAL REALITY SOFTWARE AND TECHNOLOGY , VRST '05, ACM PRESS, MONTEREY, CA, USA (NOVEMBER 7-9, 2005), 7 November 2005 (2005-11-07), pages 235-243, XP058203882, DOI: 10.1145/1101616.1101665 ISBN: 978-1-59593-098-9 * the whole document * ----- | 1-8 | TECHNICAL FIELDS SEARCHED (IPC) H04N G06T |

The present search report has been drawn up for all claims

| Place of search | Date of completion of the search | Examiner |
|---|---|---|
| Munich | 10 June 2025 | McGrath, Simon |

EPO FORM 1503 03.82 (P04C01)

## ANNEX TO THE EUROPEAN SEARCH REPORT
## ON EUROPEAN PATENT APPLICATION NO.

EP 25 30 5042

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| WO 2024256340 A1 | 19-12-2024 | NONE | |

EPO FORM P0459